# EUROPÄISCHE PATENTSCHRIFT

(11) **EP 2 057 068 B1**
(45) Veröffentlichungstag und Bekanntmachung des Hinweises auf die Patenterteilung: **22.02.2012**
(21) Anmeldenummer: 07788481.5
(22) Anmeldetag: 17.08.2007
(51) Int. Cl.: B63H 21/06, B63H 21/10, B63H 21/14, B63H 21/20, B63J 3/02, F01K 15/04, F01K 23/10

(54) **VERFAHREN ZUM BETRIEB EINES SCHIFFES SOWIE SCHIFF MIT EINEM ANTRIEBSSYSTEM MIT ABWÄRMERÜCKGEWINNUNG**
METHOD FOR THE OPERATION OF A VESSEL, AND VESSEL HAVING A PROPULSION SYSTEM WITH WASTE HEAT RECOVERY
PROCÉDÉ POUR FAIRE FONCTIONNER UN BATEAU ET BATEAU ÉQUIPÉ D'UN SYSTÈME D'ENTRAÎNEMENT AVEC RÉCUPÉRATION DE LA CHALEUR PERDUE

(30) Priorität: 31.08.2006 DE 102006040857
(43) Veröffentlichungstag der Anmeldung: 13.05.2009
(73) Patentinhaber: SIEMENS AKTIENGESELLSCHAFT, 80333 München (DE)
(72) Erfinder: TIGGES, Kay, 21698 Harsefeld (DE); BONEFELD, Claus, DK-2800 Kongens Lyngby (DK); KAHLE, Jens, 22851 Norderstedt (DE)
(86) Internationale Anmeldenummer: PCT/EP2007/058578
(87) Internationale Veröffentlichungsnummer: WO 2008/025688

(56) Entgegenhaltungen:
- WO-A-2006/072791
- FR-A- 2 479 130
- GB-A- 1 159 090
- JP-A- 57 121 996
- JP-A- 57 126 793

## Beschreibung

Die Erfindung betrifft ein Verfahren zum Betrieb eines Schiffes mit einem Antriebssystem mit Abwärmerückgewinnung gemäß Oberbegriff des Patentanspruchs 1 sowie ein Schiff mit einem Antriebssystem mit Abwärmerückgewinnung gemäß Oberbegriff des Patentanspruchs 5; ein derartiges Verfahren und ein derartiges Schiff sind z.B. aus der Veröffentlichung "Less emissions through waste heat recovery", Wärtsilä Corporation, April 2004, präsentiert auf der Green Ship Conference, London, 28/29 April 2004, bekannt.

Das Antriebssystem großer Cargoschiffe, beispielsweise Containerschiffe, umfasst üblicherweise als Hauptmaschine eine Verbrennungskraftmaschine in Form eines langsam laufenden Zweitakt-Dieselmotors zur Erzeugung von mechanischer Energie zum Antrieb einer Wellenanlage, z.B. einer Propellerwelle, die mit einem Schiffpropeller gekoppelt ist. Die Antriebsleistung derartiger Motoren beginnt bei ca. 10 MW und endet zur Zeit bei über 70 MW.

Elektrische Verbraucher an Bord des Schiffes werden üblicherweise aus einem elektrischen Schiffsnetz mit elektrischer Energie versorgt, die wiederum von Stromgeneratoren erzeugt wird, die von schneller als die Hauptmaschine laufenden Hilfsmaschinen, üblicherweise schnell laufenden Viertakt-Dieselmotoren, angetrieben werden.

Steigende Brennstoffpreise, der Wunsch nach geringeren Emissionen und nach geringeren Betriebskosten haben in den letzten Jahren das Interesse an der Nutzung der Abwärme der Hauptmaschine zu Energierückgewinnung verstärkt. Nutzbare Abwärme findet sich insbesondere in Abgasen und Kühlmitteln der Hauptmaschine.

Bei einem aus der vorgenannten Veröffentlichung bekannten Schiff wird mittels eines Wärmetauschers Abwärme der Hauptmaschine an Wasser eines Wasser-Dampfkreislaufes übertragen, wodurch das Wasser verdampft wird. Das verdampfte Wasser wird anschließend in einer Dampfturbine entspannt und seine Energie in mechanische Energie umgewandelt, die mittels eines Generators wiederum in elektrische Energie umgewandelt wird, mit der über ein Schiffsnetz elektrische Verbraucher des Schiffes betrieben werden. Zu den elektrischen Verbrauchern zählt auch ein über einen Umrichter mit dem elektrischen Schiffsnetz verbundener Wellenmotor, der mit der Wellenanlage gekoppelt ist und elektrische Energie aus dem Schiffsnetz in mechanische Energie zum Antrieb der Wellenanlage umwandelt.

Wenn das Abwärmerückgewinnungssystem Energie in das Schiffsnetz einspeist, können die Hilfsmaschinen zum Antrieb der Stromgeneratoren entlastet und im besten Fall sogar abgeschaltet werden. Durch diese Maßnahme können die Brennstoff-und Betriebskosten sowie Emissionen der Hilfsmaschinen deutlich verringert werden.

Eine Vorrichtung und ein Verfahren gemäss den Oberbegriffen der unabhängigen Ansprüche 1 und 5 ist z.B. and aus GB-A-1 159 090 bekannt.

Hiervon ausgehend ist es Aufgabe vorliegender Erfindung, ein Verfahren zum Betrieb eines vorstehend erläuterten Schiffes und ein, insbesondere für die Durchführung des Verfahrens geeignetes, Schiff anzugeben, die eine optimale Nutzung der Abwärme der Hauptmaschine ermöglichen.

Die Lösung der auf das Verfahren gerichteten Aufgabe gelingt durch ein Verfahren gemäß Patentanspruch 1; vorteilhafte Ausgestaltungen des Verfahrens sind Gegenstand der Unteransprüche 2 bis 4. Die Lösung der auf das Schiff gerichteten Aufgabe gelingt durch ein Schiff gemäß Patentanspruch 5; vorteilhafte Ausgestaltungen des Schiffes sind Gegenstand der Unteransprüche 6 bis 8.

Bei dem erfindungsgemäßen Verfahren wird der elektrische Gesamtenergieverbrauch der elektrischen Verbraucher, d.h. die Summe der Energieverbrauche der einzelnen Verbraucher, derart geregelt, dass der Druck des verdampften Arbeitsmittels, beispielsweise eines Dampfkreislaufes des Abwärmerückgewinnungssystems, innerhalb vorgegebener Grenzen bleibt. Die Erfindung geht hierbei von der Erkenntnis aus, dass sich der Druck des verdampften Arbeitsmittels vor der Turbine in Abhängigkeit von der von dem Generator abgegebenen elektrischen Energie einstellt. Je mehr elektrische Energie von dem Generator an die elektrischen Verbraucher abgebbar ist, umso geringer ist der Druck und umgekehrt. Durch Regelung des Gesamtenergieverbrauches kann somit die durch den Generator erzeugbare elektrische Energie, damit die nutzbare Energie des Arbeitsmitteldampfes und letztendlich die nutzbare Energie aus der Abwärme der Hauptmaschine geregelt werden.

Durch geeignete Wahl einer unteren Grenze kann beispielsweise sichergestellt werden, dass nicht zuviel Dampf von der Dampfturbine abgenommen wird, so dass der Druck hinter der Turbine zusammenbricht, was mit Energieverlusten verbunden ist. Durch geeignete Wahl einer oberen Grenze kann beispielsweise eine Schutzreaktion des Abwärmerückgewinnungssystems zum Schutz der Dampfturbine vor Überdruck, z.B. eine Öffnung eines Bypass-Ventiles, vermieden werden, was ebenfalls mit Energieverlusten verbunden wäre. Wenn der Druck innerhalb der vorgegebenen Grenzen bleibt, kann die zur Verfügung stehende Abwärmeenergie somit besonders effizient genutzt und damit der Wirkungsgrad des Gesamtsystems optimiert werden.

Da üblicherweise die meisten Verbraucher an Bord des Schiffes hinsichtlich ihres Energieverbrauches gar nicht oder nur eingeschränkt regelbar sind, erfolgt die Regelung des elektrischen Gesamtenergieverbrauchs innerhalb der vorgegebenen Grenzen bevorzugt über zumindest einen hinsichtlich seines elektrischen Energieverbrauches variablen Verbraucher. Über einen derartigen variablen Verbraucher kann besonders einfach und gezielt der Gesamtenergieverbrauch und somit der Druck des verdampften Arbeitsmittels beeinflusst werden.

Gemäß einer besonders vorteilhaften Ausgestaltung der Erfindung ist der variable Verbraucher ein mechanisch mit der Wellenanlage gekoppelter elektrischer Motor, in der Fachliteratur auch als "Wellenmotor" bezeichnet. Über einen derartigen Motor kann vorhandene elektrische Überschussleistung wieder in Form mechanischer Energie auf die Wellenanlage des Schiffshauptantriebes zurückgeführt und dadurch die Hauptmaschine entlastet werden. Es sind Wellenmotoren mit Leistungen im Bereich von bis zu 5 - 10 % der Leistung der Hauptmaschine verfügbar, die somit innerhalb eines großen Bereiches hinsichtlich ihres Energieverbrauches regelbar sind und damit in den meisten Betriebsphasen des Schiffes die Einhaltung der vorgegeben Grenzen für den Druck des verdampften Arbeitsmittels und somit einen effiziente Nutzung der Abwärme der Hauptmaschine ermöglichen.

Für den Betrieb des Abwärmerückgewinnungssystems auch bei nur geringer Abwärme der Hauptmaschine kann Wärme einer weiteren Wärmequelle, z.B. eines Zusatzbrenners, an das Arbeitsmittel übertragen werden. Hierdurch kann die Dampfturbine vorgeheizt bzw. zusätzlicher Dampf für die Dampfturbine erzeugt werden.

Ein erfindungsgemäßes Schiff weist eine Regelungseinrichtung auf zur Regelung des elektrischen Gesamtenergieverbrauches der elektrischen Verbraucher, derart, dass der Druck des verdampften Arbeitsmittels innerhalb vorgegebener Grenzen bleibt.

Gemäß eine besonders vorteilhaften Ausgestaltung des erfindungsgemäßen Schiffes ist zumindest einer der elektrischen Verbraucher ein hinsichtlich seines elektrischen Energieverbrauches variabler Verbraucher. Über einen derartigen variablen Verbraucher kann besonders einfach und gezielt der Gesamtenergieverbrauch geändert und somit der Druck des verdampften Arbeitsmittels beeinflusst werden. Bevorzugt ist der hinsichtlich seines Energieverbrauches regelbare Verbraucher ein mechanisch mit der Wellenanlage gekoppelter elektrischer Motor, in der Fachliteratur auch als "Wellenmotor" bezeichnet.

Die Erfindung sowie weitere vorteilhaftes Ausgestaltungen der Erfindung gemäß Merkmalen der Unteransprüche werden im Folgenden anhand von Ausführungsbeispielen in den Figuren näher erläutert. Es zeigt:
- FIG 1: ein Prinzipschaltbild eines Schiffes mit einem An triebssystems mit Abwärmerückgewinnung und
- FIG 2: beispielhaft über der Zeit den Verlauf des Druckes eines verdampften Arbeitsmittels eines Dampfkreislaufes eines Abwärmrückgewinnungssystems bei einem geregelten und bei einem ungeregelten Energieverbrauch.

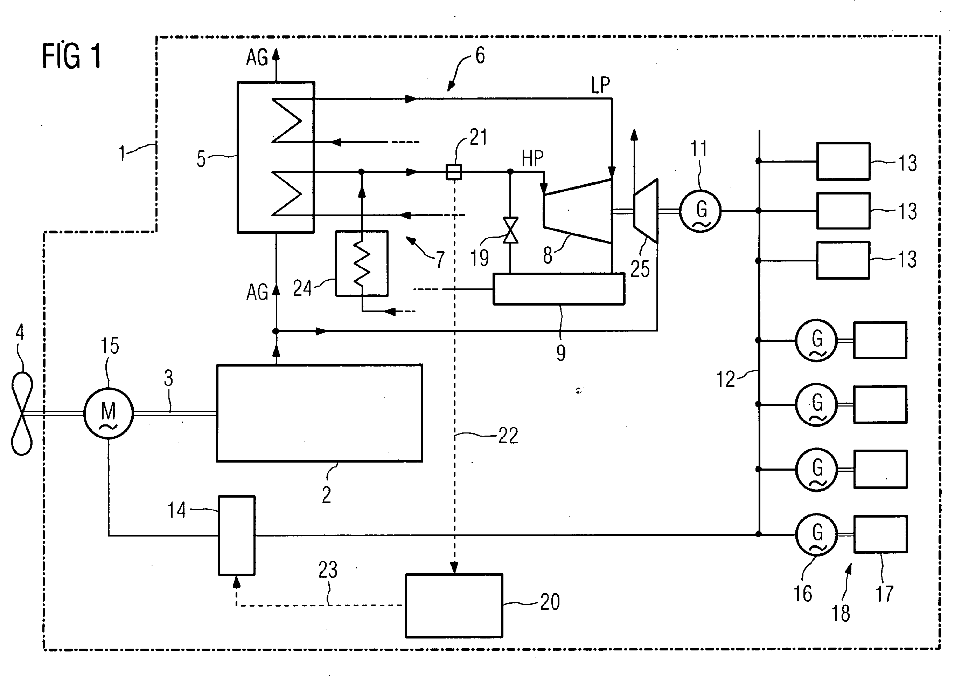

Ein in FIG 1 stark schematisiert gezeigtes Schiff 1, z.B. ein großes Containerschiff, weist ein Antriebssystem mit einer Hauptmaschine 2 in Form einer Verbrennungskraftmaschine, vorzugsweise einen langsam laufenden Zweitakt-Dieselmotor, auf, die eine Wellenanlage 3 antreibt, die mit einem Schiffpropeller 4 gekoppelt ist.

Die Abwärme der Hauptmaschine 2 wird an ein Arbeitsmittel, vorzugsweise Wasser, übertragen, wodurch das Arbeitsmittel verdampft wird. Hierzu ist ein Wärmetauscher 5 vorgesehen, der primärseitig von den heißen Abgasen AG der Hauptmaschine 2 durchströmt und sekundärseitig von Wasser eines Niederdruck-Wasserdampfkreislaufes 6 und Wasser eines Hochdruck-Wasserdampfkreislaufes 7 durchströmt wird. Durch die Übertragung von Wärme der Abgase AG an das Wasser wird das Wasser in den Kreisläufen 6, 7 verdampft. Der Wasserdampf wird der Niederdruck- bzw. Hochdruckseite einer Dampfturbine 8 zugeführt, darin entspannt und seine Energie in mechanische Energie umgewandelt wird. Die mechanische Energie wird anschließend mittels eines Generators 11 in elektrische Energie umgewandelt.

Das in der Dampfturbine 8 entspannte Arbeitsmittel wird anschließend in einem Kondensator 9 kondensiert und in nicht näher dargestellte Weise wieder dem Wärmetauscher 5 zugeführt.

Ein Teil der Abgase AG kann zusätzlich direkt einer Leistungsturbine (Power Turbine) 10 zugeführt werden, die ebenfalls mechanisch mit dem Generator 11 gekoppelt ist.

Ein elektrisches Schiffsnetz 12 dient zur Energieversorgung elektrischer Verbraucher 13 des Schiffes. Aus Gründen der Übersichtlichkeit sind in FIG 1 nur drei elektrische Verbraucher dargestellt, in der Praxis wird jedoch eine größere Anzahl derartiger Verbraucher 13 aus dem Schiffsnetz 12 mit Strom versorgt.

Zur Energieerzeugung für das Schiffsnetz 12 sind mehrere Generatoren 16 vorgesehen, die jeweils von einer schneller als die Hauptmaschine laufenden Hilfsmaschine 17 angetrieben werden. Bei den Hilfsmaschinen 17 handelt es sich üblicherweise um schnell laufende Viertakt-Dieselmotoren mit einer Leistung von beispielsweise bis zu 5 MW. Üblicherweise sind jeweils ein Generator 16 und ein Dieselmotor 17 zu einem Dieselgeneratoraggregat 18 zusammengefasst.

Ein Wellenmotor 15 ist mechanisch mit der Propellerwelle 3 gekoppelt und elektrisch über einen Umrichter 14 und gegebenenfalls einen nicht näher dargestellten Transformator mit dem Schiffsnetz 12 verbunden. Der Umrichter 14 ist beispielsweise als Gleichstrom-Zwischenkreis-Umrichter ausgebildet und besteht aus einem motorseitigen Stromrichter und einem netzseitigen Stromrichter.

Der Wellenmotor 15 ist als langsam laufende Synchronmaschine ausgebildet und wirkt vorzugsweise direkt ohne zwischengeschaltetes Getriebe auf die Propellerwelle 3. Der Wellenmotor 15 kann aber auch über ein Getriebe an der Propellerwelle 3 angekuppelt oder mit der Kurbelwelle der Hauptmaschine 2 gekuppelt sein, und zwar an dem Ende, das von der Propellerwelle 3 abliegt.

Sobald Abwärme der Hauptmaschine vorhanden ist und über das Abwärmerückgewinnungssystem elektrische Energie in das Schiffsnetz 12 eingespeist wird, können die Hilfsmaschinen zum Antrieb der Stromgeneratoren entlastet und im besten Fall sogar abgeschaltet werden. Durch diese Maßnahme können die Brennstoff- und Betriebskosten sowie Emissionen der Hilfsmaschinen deutlich verringert werden.

Der Wellenmotor 15 stellt einen variabler Verbraucher dar, der die von den Schiffsverbrauchern 13 nicht benötigte elektrische Überschussleistung in Form von mechanischer Energie auf die Propellerwelle 3 zurückführt, wodurch die Hauptmaschine entlastet und somit Brennstoffverbrauch und Emissionen der Hauptmaschine reduziert werden können.

Durch den Umrichter 14 kann die Größe des Energieflusses von dem Schiffsnetz 12 in den Wellenmotor 15 geregelt werden. Mit Hilfe des Umrichters 14 und des Wellenmotors 15 kann somit auf besonders einfach Weise der Gesamtenergieverbrauch der elektrischen Verbraucher an Bord des Schiffes geregelt werden.

Eine Regelungseinrichtung 20 dient zur Regelung des elektrischen Gesamtenergieverbrauches, d.h. der Summe des Energieverbrauches der elektrischen Verbraucher 13 und des Energieverbrauches des Wellenmotors 15, in Abhängigkeit von dem Druck des verdampften Arbeitsmittels in dem Hochdruck-Wasserdampfkreislauf 7. Der Gesamtenergieverbrauch wird hierbei vor allem über den Energieverbrauch des Wellenmotors 15 geregelt. Die Regelungseinrichtung 20 regelt den Energiefluss über den Umrichter 14 in den Wellenmotor 15 und somit den Verbrauch an elektrische Energie in dem Wellenmotor 15 derart, dass der Druck des verdampften Arbeitsmittels in dem Hochdruck-Wasserdampfkreislauf 7 innerhalb vorgegebener Grenzen bleibt.

Die Regelungseinrichtung 20 ist hierzu über eine Leitung 22 mit einem vor die Turbine 8 in den Hochdruck-Wasserdampfkreislauf 7 geschalteten Drucksensor 21 verbunden und erfasst hierüber den Druck des Wasserdampfes vor der Turbine 8.

Weiterhin ist die Regelungseinrichtung 20 über eine Leitung 23 mit dem Umrichter 14 verbunden und regelt hierüber die Größe des Energieflusses über den Stromrichter 14 in den Wellenmotor 15 und somit den Energieverbrauch des Wellenmotors 15.

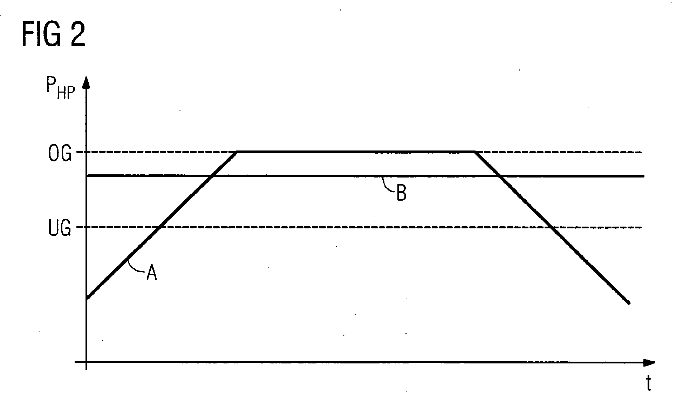

FIG 2 zeigt hierzu beispielhaft den Druck P_{HP} des verdampften Arbeitsmittels in dem Hochdruck-Wasserdampfkreislauf 7 vor dem Eintritt in die Turbine 8 in Abhängigkeit von der Zeit t zum einen für den Fall eines ungeregelten Energieverbrauchs (Kurve A) und im Fall eines geregelten Energieverbrauchs (Kurve B). Hierbei stellt der obere Grenzdruck OG den Druck dar, ab dem ein Bypassventil 19 öffnet und das verdampfte Arbeitsmittel unter Umgehung der Dampfturbine 8 dem Kondensator 9 zuführt. Hierdurch wird zwar die Dampfturbine 8 vor unzulässig hohen Drücken geschützt, andererseits geht aber auch Energie verloren. Der untere Grenzdruck UG stellt den Druck dar, ab dem hinter der Dampfturbine 4 der Druck zusammenbricht, was ebenfalls mit Energieverlusten verbunden ist.

Im Fall eines ungeregelten Energieverbrauchs kann nun ein derart hoher Energieverbrauch auftreten, dass sich ein Druck P_{HP} des verdampften Arbeitsmittels einstellt, der kleiner als der untere Grenzdruck UG ist. Dies ist mit Energieverlusten und somit mit Wirkungsgradverlusten verbunden. Umgekehrt kann aber auch ein derart niedriger Energieverbrauch auftreten, dass sich ein Druck P_{HP} einstellen würde, der ohne Öffnen des Bypassventils 19 sogar den oberen Grenzdruck OG überschreiten würde. Aufgrund des Öffnens des Bypassventils 19 bei Erreichen des oberen Grenzdruckes OG kommt es dann zwar zu einer Begrenzung des Druckes P_{HP} auf den Grenzwert OG, was jedoch ebenfalls mit Energieverlusten und somit mit Wirkungsgradverlusten verbunden ist.

Bei einer erfindungsgemäße Regelung des Energieverbrauchs kann - wie mit der Kurve B veranschaulicht - sichergestellt werden, dass der Druck P_{HP} des verdampften Arbeitsmittels stets unterhalb des oberen Grenzdrucks OG und oberhalb des unteren Grenzdrucks UG bleibt und somit derartige Energieverluste vermieden werden.

Der elektrische Energieverbrauch wird hierbei über den Wellenmotor 15 als variablen Verbraucher geregelt. Dessen Energieverbrauch wird (bei ansonsten unverändertem Energieverbrauch der weiteren Verbraucher 13 an Bord des Schiffes) derart geregelt, dass der Druck P_{HP} des verdampften Arbeitsmittels stets unterhalb des oberen Grenzdrucks OG und oberhalb des unteren Grenzdrucks UG bleibt. Durch geeignete Wahl der Werte für die Grenzdrücke OG und UG kann dann eine besonders effiziente Nutzung der Dampfenergie ermöglicht werden. Im Fall einer Auslegung einer Turbine auf einen Druck von 10 bar wird beispielsweise ein oberer Grenzdruck OG von 9,5 bar und ein unterer Grenzdruck UG von 6,0 bar gewählt.

Im Betrieb wird der Niederdruck-Wasserdampfkreislauf auf die Dampfturbine 8 zugeschaltet, wenn der Hochdruck-Wasserdampfkreislauf 7 einen bestimmten Druck erreicht hat. Wenn der Niederdruck-Wasserdampfkreislauf 6 wiederum einen bestimmten Druck erreicht hat, wird die Leistungsturbine 10 zugeschaltet. Hierdurch wird jeweils die durch das Abwärmerückgewinnungssystem erzeugbare elektrische Energie erhöht. Auf der Verbraucherseite kann dann durch den variablen Verbraucher in Form des Wellenmotors 15 in entsprechendem Maße der elektrische Energieverbrauch erhöht werden, so dass die gesamte zur Verfügung stehende Abwärmeenergie genutzt werden kann.

Für den Betrieb des Abwärmerückgewinnungssystems auch bei nur geringer Abwärme der Hauptmaschine kann Wärme einer weiteren Wärmequelle 24, z.B. eines Zusatzbrenners, an das Arbeitsmittel des Kreislaufes 7 übertragen werden. Hierdurch kann die Dampfturbine 8 vorgeheizt bzw. zusätzlicher Dampf für die Dampfturbine 8 erzeugt werden. Die Wärmequelle 24 ist hierzu parallel zu dem Wärmetauscher 5 in den Kreislauf 7 geschaltet.

## Patentansprüche

1. Verfahren zum Betrieb eines Schiffes (1) mit einem Antriebssystem mit Abwärmerückgewinnung, wobei
- mindestens eine Hauptmaschine (2) eine Wellenanlage (3) an treibt, die mit einem Schiffpropeller (4) gekoppelt ist,
- Abwärme der Hauptmaschine (2) an ein Arbeitsmittel übertragen wird, wodurch das Arbeitsmittel verdampft wird,
- das verdampfte Arbeitsmittel entspannt und seine Energie in mechanische Energie umgewandelt wird,
- die mechanische Energie in elektrische Energie umgewandelt wird,
- mit der elektrischen Energie elektrische Verbraucher (13, 15) des Schiffes versorgt werden,
**dadurch gekennzeichnet, dass** der elektrische Gesamtenergieverbrauch der elektrischen Verbraucher derart geregelt wird, dass der Druck des verdampften Arbeitsmittels innerhalb vorgegebener Grenzen (UG, OG) bleibt.

2. Verfahren nach einem der vorhergehenden Ansprüche,
**dadurch gekennzeichnet, dass** die Regelung des elektrischen Gesamtenergieverbrauches über einen hinsichtlich seines elektrischen Energieverbrauches variablen Verbraucher erfolgt.

3. Verfahren nach Anspruch 2,
**dadurch gekennzeichnet, dass** der variable Verbraucher ein mechanisch mit der Wellenanlage (3) gekoppelter elektrischer Motor (15) ist.

4. Verfahren nach einem der vorhergehenden Ansprüche,
**dadurch gekennzeichnet, dass** Wärme einer weiteren Wärmequelle (24) an das Arbeitsmittel übertragen wird.

5. Schiff (1) mit einem Antriebssystem mit Abwärmerückgewinnung, insbesondere zur Durchführung des Verfahrens nach einem der vorhergehenden Ansprüche, umfassend
- mindestens eine Hauptmaschine (2) zum Antrieb einer Wellen anlage (3), die mit einem Schiffpropeller (4) gekoppelt ist,
- einen Wärmetauscher (5) zur Übertragung von Abwärme der Hauptmaschine (2) an ein Arbeitsmittel zu dessen Verdampfung,
- eine Dampfturbine (8) zur Entspannung des verdampften Ar beitsmittels und zur Umwandlung von dessen Energie in mechanische Energie und
- einen Generator (11) zur Umwandlung der mechanischen Energie in elektrische Energie zur Versorgung elektrischer Verbraucher (13, 15) des Schiffes,
**gekennzeichnet durch** eine Regelungseinrichtung (20) zur Regelung des elektrischen Energieverbrauches der elektrischen Verbraucher derart, dass der Druck des verdampften Arbeitsmittels innerhalb vorgegebener Grenzen (UG, OG) bleibt.

6. Schiff (1) nach Anspruch 5,
**dadurch gekennzeichnet, dass** zumindest einer der elektrischen Verbraucher (13, 15) ein hinsichtlich seines elektrischen Energieverbrauches variabler Verbraucher ist.

7. Schiff (1) nach Anspruch 6,
**dadurch gekennzeichnet, dass** der variable Verbraucher ein mechanisch mit der Wellenanlage gekoppelter elektrischer Motor (15) ist.

8. Schiff (1) nach einem der Ansprüche 5 bis 7,
**gekennzeichnet durch** eine weitere Wärmequelle (24) zur Übertragung von Wärme an das Arbeitsmittel.

## Claims

1. Method for operation of a marine vessel (1) having a propulsion system with waste heat recovery, wherein
- at least one main engine (2) drives a shaft installation (3) which is coupled to a marine vessel propeller (4),
- waste heat from the main engine (2) is transmitted to an operating medium, by which means the operating medium is vaporized,
- the vaporized operating medium is expanded and its energy is converted to mechanical energy,
- the mechanical energy is converted to electrical energy,
- the electrical energy is used to supply electrical loads (13, 15) of the marine vessel,
**characterized in that** the total electrical energy consumption of the electrical loads is regulated such that the pressure of the vaporized operating medium remains within predetermined limits (UG, OG).

2. Method according to Claim 1,
**characterized in that** the total electrical energy consumption is regulated by means of a load whose electrical energy consumption is variable.

3. Method according to Claim 2,
**characterized in that** the variable load is an electric motor (15) which is mechanically coupled to the shaft installation (3).

4. Method according to one of the preceding claims,
**characterized in that** heat from a further heat source (24) is transmitted to the operating medium.

5. Marine vessel (1) having a propulsion system with waste heat recovery, in particular for carrying out the method according to one of the preceding claims, comprising
- at least one main engine (2) for driving a shaft installation (3) which is coupled to a marine vessel propeller (4),
- a heat exchanger (5) for transmission of waste heat from the main engine (2) to an operating medium in order to vaporize it,
- a steam turbine (8) for expansion of the vaporized operating medium and for conversion of its energy to mechanical energy, and
- a generator (11) for conversion of the mechanical energy to electrical energy in order to supply electrical loads (13, 15) of the marine vessel,
**characterized by** a regulating device (20) for regulation of the electrical energy consumption of the electrical loads such that the pressure of the vaporized operating medium remains within predetermined limits (UG, OG).

6. Marine vessel (1) according to Claim 5,
**characterized in that** at least one of the electrical loads (13, 15) is a load whose electrical energy consumption is variable.

7. Marine vessel (1) according to Claim 6,
**characterized in that** the variable load is an electric motor (15) which is mechanically coupled to the shaft installation.

8. Marine vessel (1) according to one of Claims 5 to 7,
**characterized by** a further heat source (24) for transmission of heat to the operating medium.

## Revendications

1. procédé pour faire fonctionner un bateau ( 1 ) ayant un système d'entraînement à récupération de la chaleur perdue, dans lequel
- au moins une machine ( 2 ) principale entraîne une installation ( 3 ) à arbre, qui est couplée à une hélice ( 4 ) de bateau,
- de la chaleur perdue du moteur ( 2 ) principal est transmise à un fluide de travail, de sorte que le fluide de travail s'évapore,
- le fluide de travail évaporé se détend et son énergie est transformée en énergie mécanique,
- l'énergie mécanique est transformée en énergie électrique,
- des appareils ( 13, 15 ) consommateurs d'électricité du bateau sont alimentés en énergie électrique,
**caractérisé en ce que** l'on règle la consommation globale d'énergie électrique des appareils consommateurs d'électricité, de manière à ce que la pression du fluide de travail évaporé reste dans des limites ( UG, OG ) prescrites.

2. Procédé suivant l'une des revendications précédentes, **caractérisé en ce qu'**on effectue la régulation de la consommation globale d'énergie électrique sur un appareil consommateur variable, en ce qui concerne sa consommation d'énergie électrique.

3. Procédé suivant la revendication 2, **caractérisé en ce que** l'appareil consommateur variable est un moteur ( 15 ) électrique couplé mécaniquement à l'installation ( 3 ) à arbre.

4. Procédé suivant l'une des revendications précédentes, **caractérisé en ce que** la chaleur d'une autre source ( 24 ) de chaleur est transmise au fluide de travail.

5. Bateau ( 1 ) ayant un système d'entraînement à récupération de la chaleur perdue, notamment pour effectuer le procédé suivant l'une des revendications précédentes, comprenant
- au moins une machine ( 2 ) principale pour l'entraînement d'une installation ( 3 ) à arbre, qui est couplée à une hélice ( 4 ) de bateau,
- un échangeur de chaleur ( 5 ) pour la transmission de la chaleur perdue de la machine ( 2 ) principale à un fluide de travail en vue de son évaporation,
- une turbine ( 8 ) à vapeur pour la détente du fluide de travail évaporé et pour la transformation de son énergie en énergie mécanique et
- une génératrice ( 11 ) pour la transformation de l'énergie mécanique en énergie électrique pour l'alimentation d'appareils ( 13, 15 ) consommateurs d'électricité du bateau,
**caractérisé par** un dispositif ( 20 ) de régulation de la consommation d'énergie électrique des appareils consommateurs d'électricité, de manière à ce que la pression du fluide de travail évaporé reste à l'intérieur de limites ( UG, OG ) à prescrites.

6. Bateau ( 1 ) suivant la revendication 5, **caractérisé en ce qu'**au moins l'un des appareils ( 13, 15 ) consommateurs d'électricité est un appareil consommateur variable en ce qui concerne sa consommation d'énergie électrique.

7. Bateau ( 1 ) suivant la revendication 6,
**caractérisé en ce que** l'appareil consommateur variable est un moteur ( 15 ) électrique couplé mécaniquement à l'installation à arbre.

8. Bateau ( 1 ) suivant l'une des revendications 5 à 7,
**caractérisé par** une autre source ( 24 ) de chaleur pour transmettre de la chaleur au fluide de travail.
